# EUROPEAN PATENT APPLICATION

(11) **EP 2 907 638 A1**
(43) Date of publication of application: **19.08.2015**
(21) Application number: 12886122.6
(22) Date of filing: 05.10.2012
(51) Int. Cl.: B28B 11/14

(54) **CUTTING METHOD FOR HONEYCOMB DRIED BODY, PRODUCTION METHOD FOR HONEYCOMB STRUCTURE, HONEYCOMB DRIED BODY, AND HONEYCOMB STRUCTURE**

(71) Applicant: Ibiden Co., Ltd, Ogaki-shi, Gifu 503-8604 (JP)
(72) Inventor: MAKINO Hayato, Ibi-gun Gifu 501-0695 (JP); ISHIKAWA Shigeharu, Ibi-gun Gifu 501-0695 (JP)
(74) Representative: Hoffmann Eitle
(86) International application number: PCT/JP2012/075977
(87) International publication number: WO 2014/054168

(57) **Abstract**

The present invention aims to provide a method for cutting a honeycomb dried body that can cut a honeycomb dried body to a predetermined length without causing burrs on end faces or clogging of the ceramic powder in the cells. The method for cutting a honeycomb dried body of the present invention characteristically includes the step of water jet cutting to cut a honeycomb dried body to a predetermined length with a water jet, the honeycomb dried body being a dried pillar-shaped honeycomb molded body including a plurality of cells as fluid passages and cell walls defining the plurality of cells.

## Description

### TECHNICAL FIELD

The present invention relates to a method for cutting a honeycomb dried body, a method for manufacturing a honeycomb structured body, a honeycomb dried body, and a honeycomb structured body.

### BACKGROUND ART

Exhaust gas discharged from an internal combustion engine of vehicles (e.g., buses, trucks, and passenger cars) and construction machines contains particulates such as soot (hereinafter also referred to as PM). Adverse effects of the PM on the environment and human bodies have been recent issues.

To overcome this problem, various honeycomb structured bodies formed of porous ceramics have been proposed as filters to capture PM in the exhaust gas and purify the exhaust gas.

One example of methods for manufacturing a honeycomb structured body is described below.

First, a wet mixture (ceramic raw material) is prepared by mixing a ceramic powder, a binder, a liquid dispersion medium, and the like. The wet mixture is continuously extruded, and the extruded uncut molded body is then cut to a predetermined length using a wire or the like, whereby a rectangular pillar-shaped honeycomb molded body is obtained.

Next, the thus-obtained honeycomb molded body is dried. Subsequently, predetermined cells are plugged so that these cells are each plugged at one end. Then, a degreasing treatment and a firing treatment are carried out to obtain a honeycomb fired body.

Subsequently, a sealing material paste is applied to the lateral faces of each honeycomb fired body to adhere the honeycomb fired bodies to each other, whereby an aggregate body in which a plurality of honeycomb fired bodies are combined together via a sealing material layer (adhesive layer) is obtained. Next, the thus-obtained aggregate body of the honeycomb fired bodies is cut to a predetermined shape such as a round pillar shape so as to form a ceramic block. Lastly, the sealing material paste is applied to the outer periphery of the ceramic block to form a sealing material layer (peripheral coat layer), whereby a honeycomb structured body can be manufactured.

Patent Literature 1 discloses a technique in which a ceramic raw material is molded into a honeycomb molded body, and after the honeycomb molded body is dried, both ends of the honeycomb molded body is cut using a cutting disc (blade).

Patent Literature 2 discloses a method for cutting a continuously molded article, wherein a water jet cutter is used to cut a molded article continuously molded by an extruder.

### CITATION LIST

### - Patent Literature

Patent Literature 1: JP-A 2007-320312
Patent Literature 2: JP-A 2004-358843

### SUMMARY OF INVENTION

### - Technical Problem

In the case of cutting the molded body using a wire or the like, the honeycomb molded body that underwent cutting may have a deformed end face with a downwardly-bent upper end. The honeycomb molded body may also shrink from drying. Thus, the end face of the dried honeycomb molded body is cut in the manner as disclosed in Patent Literature 1 so that the deformed portion can be removed and the length of the dried honeycomb molded body can be adjusted.

A conventional method disclosed in Patent Literature 1 uses a blade for cutting both ends of a dried honeycomb molded body (hereinafter also referred to as a "honeycomb dried body"). Cutting with a blade may form burrs on the cut surface, which requires an additional end-face treatment for removing the burrs with a brush or the like. In addition, ceramic powder generated from cutting may clog the cells, which requires an additional treatment for removing the ceramic powder clogged in the cells by air blowing or the like.

Thus, a method for cutting a honeycomb dried body without causing burrs on end faces or clogging of the ceramic powder in the cells has been desired.

Patent Literature 2 discloses water jet cutting as a method for cutting a molded body continuously molded by an extruder. In Patent Literature 2, an object to be cut is a molded body continuously molded by an extruder, which is thus a soft molded body having a high moisture content.

According to Patent Literature 2, water jet cutting is carried out by wetting a molded body already having a high moisture content. Thus, wetting the molded body is less likely to significantly change the properties of the molded body. In other words, the water jet cutting disclosed in Patent Literature 2 is a method proposed as a cutting method usable for a molded body already having a high moisture content.

In the manufacturing process of a honeycomb structured body (honeycomb fired body), since a molded body continuously molded by an extruder has a high moisture content, a drying step is carried out after the molding step to prevent deformation of end faces. In other words, re-wetting a honeycomb dried body that underwent the drying step is a practice that a person skilled in the art would not usually consider because it would defeat the purpose of the drying step.

In view of the above, the present inventors examined a suitable method for cutting a honeycomb dried body. As a result, the present inventors found that the use of water jet cutting in which a honeycomb dried body is cut by jetting water thereto enables cutting of the honeycomb dried body to a predetermined length without causing burrs on end faces or clogging of ceramic powder in the cells. Thus, the present invention was accomplished.

### - Solution to Problem

Specifically, the method for cutting a honeycomb dried body of the present invention characteristically includes the step of water jet cutting to cut a honeycomb dried body to a predetermined length with a water jet, the honeycomb dried body being a dried product of a pillar-shaped honeycomb molded body including a plurality of cells as fluid passages and cell walls defining the plurality of cells.

In the method for cutting a honeycomb dried body of the present invention, the honeycomb dried body is cut to a predetermined length with a water jet.

Cutting with a water jet produces effects where burrs on end faces and clogging of ceramic powder in the cells are minimized.

Thus, removal of burrs or ceramic powder in the cells is not necessary, which can significantly simplify the manufacturing process of a honeycomb structured body.

Burrs or ceramic powder formed in a conventional method for cutting a honeycomb dried body corresponds to a cutting allowance for blade thickness. Cutting a honeycomb dried body with a blade generates frictional heat, so that ceramic powder or burrs formed upon cutting may easily adhere to end faces of the honeycomb dried body. In addition, ceramic powder, which is light, may be blown up after cutting and adhere to the honeycomb dried body.

In contrast, in the case of cutting using a water jet, ceramic powder formed by cutting is washed away by a water flow of the water jet at the same time of cutting. In addition, since no heat is generated, ceramic powder is prevented from adhering to the cut surface. As a result, a clean cut surface without burrs or clogging of the ceramic powder can be obtained.

In addition, even if the honeycomb dried body is cut with a water jet, the honeycomb dried body will not get wet much, and water will not penetrate through the cell walls, so that the strength of the honeycomb dried body will not be reduced to the point where its end faces are deformed. Water is less likely to permeate through the cell walls presumably because, unlike a honeycomb fired body that underwent firing, the honeycomb dried body does not contain pores communicating with the cell walls.

A honeycomb fired body that underwent firing has pores communicating with the cell walls. This presumably causes permeation of water through the cell walls when water jet cutting is carried out.

Specifically, the present inventors found that a honeycomb dried body, among other honeycomb bodies having a low moisture content, is especially suitable for water jet cutting.

In addition, a honeycomb dried body itself does not get wet much and its end faces are prevented from being deformed, so that there is no need to carry out the end-face treatment again after the water jet cutting step.

In the method for cutting a honeycomb dried body of the present invention, the honeycomb dried body preferably contains a forming auxiliary and an organic binder.

The presence of a forming auxiliary and an organic binder in the honeycomb dried body reduces the surface tension of the honeycomb dried body. Thus, even if the honeycomb dried body is contacted with water by water jet cutting, the water is repelled and is less likely to permeate through the cell walls. As a result, the honeycomb dried body is further prevented from getting wet.

The forming auxiliary is preferably at least one selected from the group consisting of ethylene glycol, dextrin, fatty acids, fatty acid soap, and polyalcohol. The organic binder is preferably at least one selected from the group consisting of methyl cellulose, carboxymethyl cellulose, hydroxyethyl cellulose, and polyethylene glycol.

If the forming auxiliary and the organic binder are selected from the above groups respectively, the effect given by the forming auxiliary and the organic binder will be more distinct.

The method for cutting a honeycomb dried body of the present invention preferably includes the steps of: molding a ceramic raw material by continuous extrusion using an extruder into an uncut honeycomb molded body including a plurality of cells as fluid passages and cell walls defining the plurality of cells; and
drying the uncut honeycomb molded body into an uncut honeycomb dried body,
the uncut honeycomb dried body being cut in the water jet cutting step.

An uncut honeycomb molded body is dried into a honeycomb dried body, which is then cut by water jet cutting, thereby a honeycomb dried body having a predetermined length can be obtained by single cutting. Thus, the entire process for manufacturing a honeycomb structured body can be simplified.

In addition, unlike the method disclosed in Patent Literature 1, removal of a deformed portion of an end face is not necessary so that the material loss can be reduced.

The manufacturing of a honeycomb fired body having a predetermined longitudinal length may involve cutting one of the following honeycomb bodies: honeycomb molded body, honeycomb dried body, and honeycomb fired body. Among these, the honeycomb dried body is most appropriate for cutting.

In the case of cutting the honeycomb molded body, deformation occurs after cutting, so that cutting must be carried out again after the drying step, as disclosed in Patent Literature 1.

In the case of cutting the honeycomb fired body, it is difficult to introduce a continuously extruded honeycomb molded body or honeycomb dried body directly into a firing furnace without cutting. In addition, the manufacturing of a honeycomb fired body having plugged cells involves plugging of both end faces after cutting the honeycomb fired body, and the plugged portions must be fired again. Moreover, because the honeycomb fired body is a hard material made of sintered ceramics, the cutting requires a large amount of energy, which increases the wear of a cutting tool.

In the case of cutting the honeycomb dried body, a honeycomb dried body having a predetermined length can be obtained by single cutting, and plugging can be applied to both end faces of the cut honeycomb dried body.

In the method for cutting a honeycomb dried body of the present invention, preferably, the molding, drying, and water jet cutting steps are continuously carried out, and
in the water jet cutting step, the uncut honeycomb dried body is cut while the moving speed of a jet nozzle for the water jet is synchronized with the moving speed of the uncut honeycomb dried body.

In addition, in the molding step, preferably, the moving speed of the uncut honeycomb molded body extruded from the extruder is measured by a speed sensor, and
in the water jet cutting step, the moving speed of the jet nozzle for the water jet in a direction parallel to the moving direction of the honeycomb dried body is set to be the same as the moving speed measured by the speed sensor.

Synchronization of the moving speed of the jet nozzle for the water jet with the moving speed of the honeycomb dried body enables cutting in such a manner that the cut surface is perpendicular to the longitudinal direction of the honeycomb dried body.

In addition, the moving speed of the honeycomb molded body is measured by the speed sensor, and the moving speed of the jet nozzle for the water jet is set to be the same as the moving speed measured by the speed sensor, whereby these moving speeds can be synchronized.

In the method for cutting a honeycomb dried body of the present invention, preferably, the uncut honeycomb molded body is dried by high-frequency dielectric drying in the drying step.

High-frequency dielectric drying is carried out by passing an electric current between opposite electrode plates disposed above and below or right and left of the honeycomb molded body so as to move water molecules in the honeycomb molded body by high-frequency wave energy, thus generating frictional heat.

In the case of high-frequency dielectric drying, similar to microwave drying, the object itself acts as a heating element and can heat itself. At the same time, the half-power depth (the distance at which the power density of the emitted electromagnetic wave is reduced by half) of the high-frequency wave is greater than that of the microwave. Thus, the honeycomb molded body can be uniformly dried even to the inside in a short time. In addition, high-frequency dielectric drying allows local heating, so that the drying equipment can be shortened, and the drying equipment can be further simplified because it only requires a simple electromagnetic shield.

The method for cutting a honeycomb dried body of the present invention preferably includes the steps of: molding a ceramic raw material by continuous extrusion using an extruder into an uncut honeycomb molded body including a plurality of cells as fluid passages and cell walls defining the plurality of cells;
temporarily cutting the uncut honeycomb molded body to a length longer than the predetermined length to obtain a temporarily cut honeycomb molded body; and
drying the temporarily cut honeycomb molded body into a temporarily cut honeycomb dried body,
the temporarily cut honeycomb dried body being preferably cut in the water jet cutting step.

Unlike the method disclosed in Patent Literature 1, the above method also uses a water jet to cut a honeycomb dried body, so that a clean cut surface without burrs or clogging of the ceramic powder can be obtained.

In the method for cutting a honeycomb dried body of the present invention, the honeycomb dried body preferably has a moisture content of 0 to 6% by mass.

If the honeycomb dried body has a moisture content of more than 6% by mass, the shape of the honeycomb dried body will be difficult to maintain. This tendency is remarkable particularly in the case of manufacturing a honeycomb molded body having an aperture ratio of 75% or more.

In the method for cutting a honeycomb dried body of the present invention, an angle between the jet nozzle for the water jet and an upper face of the uncut honeycomb dried body is preferably 5 to 85°.

The wall (hereinafter also referred to as an "outer wall") positioned outermost in a cross section perpendicular to the longitudinal direction of the honeycomb dried body is thicker than other cell walls, and thus is a portion where cutting tends to be difficult.

If the direction of the outer wall of the honeycomb dried body is parallel to the direction of the water jet, when a water jet hits the outer wall in a parallel direction during the movement of the water jet, the total thickness of the walls to be cut at one time will be very large so that a high cutting force will be required, whereas when the water jet moves away from the outer wall in a parallel direction, the total thickness of walls to be cut at one time will be small so that the cutting force does not need to be so high. In other words, variation in the thickness of the walls to be cut (the amount of cutting) will be large in the course of the movement of the water jet.

If the angle between the jet nozzle for the water jet and the upper face of the honeycomb dried body is in the above range, the direction of the outer wall of the honeycomb dried body is prevented from being parallel to the direction of the water jet, so that the range of variation in the thickness (the amount of cutting) of walls to be cut can be reduced, thus allowing stable cutting.

In the method for cutting a honeycomb dried body of the present invention, an angle between the jet nozzle for the water jet and all the cell walls in a cross section perpendicular to the longitudinal direction of the uncut honeycomb dried body is preferably 5 to 85°.

If the direction of the cell walls of the honeycomb dried body is parallel to the direction of the water jet, when a water jet hits the cell walls in a parallel direction during the movement of the water jet, the total thickness of the walls to be cut at one time will be very large so that a high cutting force will be required, whereas when the water jet moves away from the cell walls in a parallel direction, the total thickness of walls to be cut at one time will be small so that the cutting force does not need to be so high. In other words, variation in the thickness of the walls to be cut (the amount of cutting) will be large in the course of the movement of the water jet.

If the angle between the jet nozzle for the water jet and the cell walls is in the above range, the direction of the water jet cutter is prevented from being parallel to any cell wall, so that the range of variation in the thickness (the amount of cutting) of walls to be cut can be reduced, thus allowing stable cutting.

In the method for cutting a honeycomb dried body of the present invention, the water jet preferably has a water pressure of 200 to 400 MPa.

If the water pressure of the water jet is 200 to 400 MPa, the formation of burrs on the cut surface or clogging of the ceramic powder in the cells can be more effectively suppressed, resulting in a cleaner cut surface.

In the method for cutting a honeycomb dried body of the present invention, the cutting speed in the water jet cutting step is preferably 15 to 150 mm/sec.

The cutting speed in the above range is effective in that the water jet cutting step is prevented from becoming the rate controlling factor in the manufacturing process of the honeycomb structured body, thus not interfering with the production efficiency.

In the method for cutting a honeycomb dried body of the present invention, the honeycomb dried body preferably has an aperture ratio of 60 to 90%.

In the method for cutting a honeycomb dried body of the present invention, deformation of a honeycomb dried body can be suppressed even if the honeycomb dried body has a high aperture ratio.

The method for manufacturing a honeycomb structured body of the present invention is a method for manufacturing a honeycomb structured body including a honeycomb fired body including a plurality of cells as fluid passages and cell walls defining the plurality of cells,
the method including the step of firing a honeycomb dried body having a predetermined length obtained by the method for cutting a honeycomb dried body of the present invention to obtain the honeycomb fired body.

The honeycomb dried body of the present invention is characteristically obtained by cutting a honeycomb dried body to a predetermined length with a water jet, the honeycomb dried body being a dried product of a pillar-shaped honeycomb molded body including a plurality of cells as fluid passages and cell walls defining the plurality of cells.

The honeycomb dried body that has been cut to a predetermined length with a water jet is a honeycomb dried body having a clean cut surface without burrs or clogging of the ceramic powder.

The honeycomb structured body of the present invention characteristically includes a honeycomb fired body obtained by firing a honeycomb dried body having a predetermined length obtained by cutting a honeycomb dried body to a predetermined length with a water jet, the honeycomb dried body being a dried product of a pillar-shaped honeycomb molded body including a plurality of cells as fluid passages and cell walls defining the plurality of cells.

The honeycomb dried body that has been cut to a predetermined length with a water jet is a honeycomb dried body having a clean cut surface without burrs or clogging of the ceramic powder. Thus, the honeycomb structured body including a honeycomb fired body obtained by firing the honeycomb dried body is also a honeycomb structured body having a clean cut surface without burrs or clogging of the ceramic powder, which thus can be suitably used as a honeycomb filter or the like.

### BRIEF DESCRIPTION OF DRAWINGS

Fig. 1 is a side view schematically showing one example of a method for cutting a honeycomb dried body according to a first embodiment of the present invention.
Fig. 2 is a perspective view schematically showing one example of the shape of the honeycomb dried body.
Fig. 3 is a cross-sectional view schematically showing one example of a jet nozzle portion of a water jet cutter that can be used in the present embodiment.
Figs. 4 (a) and 4(b) are cross-sectional views each schematically showing the angular relationship of a jet nozzle for the water jet relative to an upper face and cell walls of a honeycomb dried body in a cross section perpendicular to the longitudinal direction of the honeycomb dried body.
Figs. 5 (a) and 5(b) are cross-sectional views each schematically showing the angular relationship of the jet nozzle for the water jet relative to an upper face and cell walls of a honeycomb dried body in a cross section perpendicular to the longitudinal direction of the honeycomb dried body.
Fig. 6 is a side view schematically showing one example of the water jet cutting step in which multiple jet nozzles are simultaneously used.
Fig. 7 (a) is a perspective view schematically showing one example of the honeycomb fired body obtained by the method for manufacturing a honeycomb structured body of the present embodiment. Fig. 7(b) is a cross-sectional view along line A-A of the honeycomb fired body shown in Fig. 7(a).
Fig. 8 is a perspective view schematically showing one example of the honeycomb structured body obtained by the method for manufacturing a honeycomb structured body of the present embodiment.
Fig. 9(a) is a photograph of a cut surface of a honeycomb dried body obtained in Example 1. Fig. 9(b) is a photograph of a cut surface of a honeycomb dried body obtained in Comparative Example 1.

### DESCRIPTION OF EMBODIMENTS

Embodiments of the present invention are specifically described below. The present invention, however, is not limited to these embodiments below and can be suitably modified without departing from the scope of the present invention.

### (First Embodiment)

The following description is intended to describe a first embodiment that is one embodiment of a method for cutting a honeycomb dried body of the present invention and a method for manufacturing a honeycomb structured body of the present invention.

The method for cutting a honeycomb dried body according to the first embodiment of the present invention includes a water jet cutting step to cut a honeycomb dried body to a predetermined length with a water jet, the honeycomb dried body being a dried product of a pillar-shaped honeycomb molded body including a plurality of cells as fluid passages and cell walls defining the plurality of cells.

The method also includes a molding step to mold a ceramic raw material by continuous extrusion using an extruder into an uncut honeycomb molded body including a plurality of cells as fluid passages and cell walls defining the plurality of cells; and
a drying step to dry the uncut honeycomb molded body into an uncut honeycomb dried body,
the uncut honeycomb dried body being cut in the water jet cutting step.

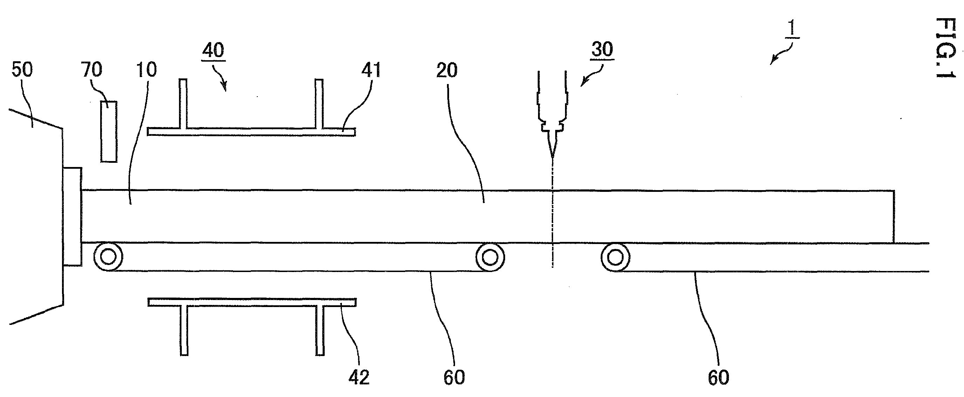

Fig. 1 is a side view schematically showing one example of the method for cutting a honeycomb dried body according to the first embodiment of the present invention.

In present embodiment, a molding-drying-cutting apparatus can be used in which an extruder, a high-frequency dielectric dryer, a water jet cutter, and a conveyor are assembled together.

A molding-drying-cutting apparatus 1 includes an extruder 50, a high-frequency dielectric dryer 40, a water jet cutter 30, and a conveyor 60.

In addition, the molding-drying-cutting apparatus 1 includes a speed sensor 70 for measuring the speed of a honeycomb molded body extruded from the extruder. The speed sensor 70 preferably measures the speed immediately after extrusion.

First, a ceramic raw material is continuously extruded from the extruder into a honeycomb molded body (molding step).

The extruder 50 includes a die at its end, and continuously extrudes a honeycomb molded body 10 having a certain shape according to the die shape.

The honeycomb molded body obtained by molding in the present embodiment is a honeycomb molded body including a plurality of cells as fluid passages and cell walls defining the plurality of cells. The shape of the honeycomb molded body is the same as that of a honeycomb dried body, which is described in detail later.

The extruded honeycomb molded body 10 is placed on the conveyor 60 and moves in an extrusion direction along the moving direction of the conveyor 60.

In the present embodiment, the extrusion speed is not particularly limited, and is preferably 1 to 10 m/min, more preferably 2 to 7 m/min.

The honeycomb molded body is formed by extruding a wet mixture (a ceramic raw material) containing a ceramic powder, an organic binder, a forming auxiliary, water, and the like. The honeycomb molded body has a high moisture content of 10 to 25% by mass or more.

Subsequently, the honeycomb molded body is dried into a honeycomb dried body (drying step).

No cutting step is involved between the molding step and the drying step. Thus, the honeycomb dried body obtained in the drying step is an uncut honeycomb dried body.

The high-frequency dielectric dryer 40 is disposed in the moving direction of the honeycomb molded body 10 from the extruder 50. The high-frequency dielectric dryer 40 includes an upper electrode 41 and a lower electrode 42 disposed such that the honeycomb molded body 10 as the object to be heated is conveyed between these electrodes.

In high-frequency dielectric drying, a high-frequency wave is applied to the honeycomb molded body which is between the electrodes. This excites water molecules in the honeycomb molded body and generates frictional heat. As a result, the honeycomb molded body is dried into a honeycomb dried body.

Fig. 1 shows the high-frequency dielectric dryer 40 in which one electrode is above and one electrode is below the honeycomb molded body 10. The electrodes do not have to be located above and below the honeycomb molded body. There is no limitation as long as the honeycomb molded body is conveyed between the electrodes. For example, two (a pair) electrodes may be disposed on the lateral sides (one on left and one on right) of the honeycomb molded body.

As shown in Fig. 1, the extruded honeycomb molded body 10 moves sequentially and continuously through the high-frequency dielectric dryer 40 by the conveyor 60.

The high-frequency dielectric dryer 40 preferably includes a discharging means (not shown) that discharges water vapor that has evaporated from the honeycomb molded body 10 to the outside of the drying space. Thereby, the humidity in the atmosphere of the drying space can be maintained at a constant level. In addition, the discharging means that discharges water vapor may be disposed downstream of the water jet cutter 30 in order to discharge water vapor present in the honeycomb dried body.

The frequency that can be used for high-frequency dielectric drying is 13.56 MHz, 27.12 MHz, or 40.68 MHz, with 13.56 MHz being particularly preferred. A wave with a frequency of 13.56 MHz has a long wavelength, which allows uniform drying of the honeycomb molded body.

The output of high-frequency dielectric drying is not particularly limited, and is preferably 0.5 to 60 kW, more preferably 3 to 50 kW, particularly preferably 6 to 45 kW.

If the output of high-frequency dielectric drying is less than 0.5 kW, the honeycomb molded body cannot be sufficiently dried, which tends to cause deformation of the honeycomb dried body, and the molding speed must be significantly reduced; or the drying equipment must be extended, which reduces the effect of shortening the entire process.

In contrast, if the output of high-frequency dielectric drying is more than 60 kW, the moisture in the honeycomb molded body tends to rapidly evaporate. Once the moisture in the honeycomb molded body is lost, organic matter starts to vibrate, resulting in an excessive increase in the temperature. Thus, the honeycomb molded body may be burned in some cases.

In the case of high-frequency dielectric drying, the electrode length in the longitudinal direction of the honeycomb molded body can be determined in view of the degree to which the amount of water in the dried honeycomb dried body is reduced, the moving speed of the conveyor, the applied voltage, and the like. For example, the electrode length is preferably 0. 4 to 7.0 m, more preferably 1.0 to 5.0 m. If the electrode length is less than 0.4 m, the molding speed must be excessively slowed down in order to sufficiently dry the honeycomb molded body even if the output of the high-frequency wave is increased. In contrast, if the electrode length is more than 7.0 m, it will reduce the effect of shortening the entire process.

The number of electrodes in the high-frequency dielectric dryer may not be two (one above and one below, or one on left and one on right of the honeycomb molded body). Two electrodes (one above and one below, or one on left and one on right of the honeycomb molded body) may form a pair, and two pairs or more of electrodes may be disposed.

In the case where two or more pairs of electrodes are disposed, the applied voltage may be varied for each pair of the electrodes, whereby more specific drying conditions can be set.

Also in the drying step, the moving speed of the conveyor is the same as the extrusion speed.

The electrode is preferably plate-shaped, and its size is not limited. For example, a rectangular-shaped electrode having size of 0.4 to 7 m (length) × 30 to 100 mm (width) is preferred.

The electrode width is preferably equal to 1 to 3 times the width of the honeycomb molded body. If the electrode width is less than 1 time, or more than 3 times the width of the honeycomb molded body, the dry state of the honeycomb dried body tends to be non-uniform.

In addition, the distance between the electrode and the honeycomb molded body is preferably 1 to 30 mm. In particular, the distance between the electrode and the honeycomb molded body is preferably 1 to 15 mm. If the distance between the electrode and the honeycomb molded body is less than 1 mm, a short circuit will occur due to a contact between the honeycomb molded body and the electrode. In contrast, if the distance is more than 30 mm, the output must be increased.

In the present embodiment, the drying step is preferably carried out using high-frequency dielectric drying. Yet, the method for drying an uncut honeycomb molded body is not limited thereto. Examples of methods for drying an uncut honeycomb molded body other than high-frequency dielectric drying include microwave drying, hot-air drying, and freeze drying. These drying methods may be used alone or in combination.

In the drying step, the honeycomb dried body is preferably dried to a moisture content of 0 to 6% by mass, more preferably 0 to 1% by mass.

Herein, "the moisture content of the honeycomb dried body" can be calculated as follows: the amount of water in the honeycomb dried body immediately after the drying step is determined from the difference between the mass of the honeycomb dried body immediately after the drying step and the mass of the honeycomb dried body in an absolute dry state; and the determined amount of water is divided by the mass of the entire honeycomb dried body immediately after the drying step. In addition, the moisture content of the honeycomb dried body can be measured by a heating and drying method moisture analyzer (MX-50 available from A&D Company, Limited).

If the moisture content of the honeycomb dried body is more than 6% by mass, the shape of the honeycomb dried body will be difficult to maintain. This tendency is remarkable particularly in the case of manufacturing a honeycomb molded body having an aperture ratio of 75% or more. If the moisture content of the honeycomb dried body is 1% by mass or less, there is no need to dry the honeycomb dried body again after the water jet cutting step, so that the entire process can be further shortened.

In the present embodiment, the drying time can be determined in view of the degree to which the amount of water in the dried honeycomb dried body is reduced, the applied voltage, and the like. The drying time is preferably 0.5 to 5 minutes, more preferably 1 to 3 minutes.

If the drying time is less than 0.5 minutes, drying tends to be insufficient even if the output is increased. In contrast, if the drying time is more than 5 minutes, drying proceeds too much, which tends to cause warpage or cracks in the honeycomb dried body. In addition, the entire process will be long.

In the present embodiment, the drying temperature is preferably 80°C to 130°C, more preferably 85°C to 120°C.

If the drying temperature is lower than 80°C, drying tends to be insufficient. In contrast, if the drying temperature is higher than 130°C, drying proceeds too rapidly, which tends to cause warpage or cracks in the honeycomb dried body.

In the present embodiment, the distance from the tip end of the die of the extruder to where drying of the uncut honeycomb molded body starts is preferably 0 to 300 mm. The upper limit of the distance is more preferably 200 mm. The lower limit of the distance may be 10 mm or 30 mm.

If the distance is more than 300 mm, the uncut honeycomb molded body tends to be easily deformed. The tendency is remarkable particularly in the case of manufacturing a honeycomb molded body having an aperture ratio of 75% or more.

In the present embodiment, the honeycomb molded body and/or the honeycomb dried body is preferably dried while being inclined at an angle such that a side thereof facing the extruder is lower. Specifically, the honeycomb molded body and/or the honeycomb dried body is preferably dried while being inclined with respect to the horizontal plane in such a manner that the side facing the extruder is lower and the side to be cut is upper.

In this manner, water vapor in the cells of the honeycomb dried body, which is generated during the drying step, can be easily discharged from the honeycomb dried body through the end to be cut in the longitudinal direction, and re-liquefaction of the water vapor in the cells can thus be prevented.

In this case, an angle between the lower face of the honeycomb molded body and/or the honeycomb dried body and the horizontal plane is preferably 5 to 30°.

If the angle is less than 5°, water vapor may not be sufficiently discharged in the case where the interval between the drying step and the cutting step is long. If the angle is more than 30°, the honeycomb molded body will be conveyed by the conveyor at a lower conveying speed, and the honeycomb dried body will be easily distorted due to an inconsistency between the conveying speed and the extrusion speed in the molding step.

The following description is intended to describe one example of the shape of the honeycomb dried body to be cut by the method for cutting a honeycomb dried body of the present invention, with reference to the figures.

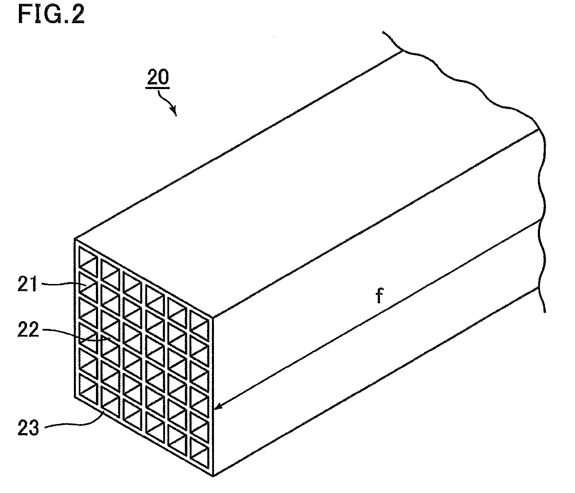

Fig. 2 is a perspective view schematically showing one example of the shape of the honeycomb dried body.

A honeycomb dried body 20 shown in Fig. 2 is an uncut honeycomb dried body including a plurality of cells 21 arranged side by side in the longitudinal direction (in the direction of an arrow f in Fig. 2) with cell walls 22 between the cells, and an outer wall 23 formed on the periphery. In the honeycomb dried body 20, ends of the cells 21 are not plugged.

In Fig. 2, one end of the honeycomb dried body is omitted to indicate that the honeycomb dried body is an uncut honeycomb dried body.

The composition of the honeycomb dried body is the same as that of the honeycomb molded body, and preferably contains a ceramic powder, an organic binder, a forming auxiliary, water, and the like. The moisture content is preferably 0 to 6% by mass after the water is removed in the drying step.

As for the ceramic powder, examples of ceramics include carbide ceramics such as silicon carbide, titanium carbide, tantalum carbide, and tungsten carbide; nitride ceramics such as aluminum nitride, silicon nitride, boron nitride, and titanium nitride; oxide ceramics such as alumina, zirconia, cordierite, mullite, and aluminum titanate; and silicon-containing silicon carbide. Among these, silicon carbide or silicon-containing silicon carbide is preferred because it is excellent in heat resistance, mechanical strength, thermal conductivity, and the like.

The silicon-containing silicon carbide is a mixture of silicon carbide and silicon metal, and preferably contains 60 wt% or more of silicon carbide.

Any organic binder may be used, but it is preferably at least one selected from the group consisting of methyl cellulose, carboxymethyl cellulose, hydroxyethyl cellulose, and polyethylene glycol. Among these, methyl cellulose is particularly preferred. Usually, the organic binder content is preferably 1 to 10 parts by weight relative to 100 parts by weight of ceramic powder.

Any forming auxiliary may be used, but it is preferably at least one selected from the group consisting of ethylene glycol, dextrin, fatty acids, fatty acid soap, and polyalcohol.

The honeycomb dried body may contain a plasticizer or a lubricant. Any plasticizer may be used, and examples thereof include glycerin. The lubricant is also not particularly limited, and examples thereof include polyoxyalkylene-based compounds such as polyoxyethylene alkyl ether and polyoxypropylene alkyl ether.

Further, the honeycomb dried body may contain, as needed, a pore-forming agent such as balloons (i.e., fine hollow spheres formed from oxide-based ceramics), spherical acrylic particles, or graphite.

The honeycomb dried body preferably contains organic matter such as an organic binder and a forming auxiliary because the organic matter leads to a reduced surface tension on the surface of the honeycomb dried body, which causes water to be repelled in the water jet cutting step, thus suppressing penetration of water through the cell walls.

In addition, the honeycomb dried body is not a porous body because it is not fired. Thus, the honeycomb dried body includes no pores communicating with the cell walls, suppressing penetration of water through the cell walls in the water jet cutting step.

Thus, the honeycomb dried body that has been cut in the water jet cutting step can maintain the substantially same moisture content as that of the uncut honeycomb dried body.

The shape of the honeycomb dried body is not limited to the quadrangular pillar shape as shown in Fig. 2. It may be another polygonal pillar shape, an elliptical pillar shape, a trapezoidal shape (the cross section is trapezoidal), a fan shape (the cross section is fan-shaped), or the like.

In addition, the cell shape is also not limited to the one having a square cross section. The cell shape may be polygonal (for example, quadrangular, pentagonal, hexagonal, or octagonal), circular, or elliptical. Further, a single honeycomb dried body may include cells of different shapes (for example, a combination of square-shaped cells and octagonal-shaped cells).

The water jet cutting step to cut the honeycomb dried body to a predetermined length with a water jet is described below.

The uncut honeycomb dried body that underwent the drying step is cut to a predetermined length with a water jet cutter.

A water jet cutter is a device capable of crushing and cutting by the impact of high-pressure water, and jets high-pressure water from a jet nozzle located at the tip end.

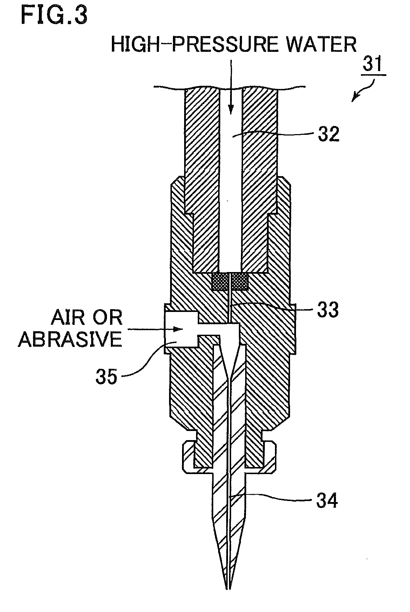

Fig. 3 is a cross-sectional view schematically showing one example of a jet nozzle portion of the water jet cutter that can be used in the present embodiment.

Fig. 3 schematically shows a jet nozzle 31 of the water jet cutter, including a high-pressure water inlet 32, a water nozzle 33, a lower nozzle 34, and an air/abrasive inlet 35.

High-pressure water is introduced from the high-pressure water inlet 32, flows through the water nozzle 33, and is jetted from the lower nozzle 34. Air or an abrasive may be introduced from the air/abrasive inlet 35. The abrasive can be effectively used when the object to be cut is hard, and garnet or the like can be used as the abrasive.

The water pressure of water jetted from the jet nozzle is preferably 200 to 400 MPa. The flow rate of water jetted is preferably 600 to 900 m/sec.

The jet nozzle of the water jet cutter moves, while jetting water, across a cross section perpendicular to the longitudinal direction of the honeycomb dried body (i.e., the jet nozzle moves in a front-to-back or back-to-front direction of the plane of Fig. 1) to cut the honeycomb dried body in a direction perpendicular to the longitudinal direction of the honeycomb dried body. Thereby, a honeycomb dried body having a predetermined longitudinal length can be obtained.

The water jet cutter includes a drive mechanism (not shown) capable of moving the position of the jet nozzle.

The cutting speed in the water jet cutting step is preferably 15 to 150 mm/sec. The cutting speed can be adjusted by adjusting the moving speed of the jet nozzle.

In the case where a molding-drying-cutting apparatus including a conveyor as shown in Fig. 1 is used to continuously carry out the molding, drying, and water jet cutting steps, the conveyor is driven during the water jet cutting step so that the honeycomb dried body is moving at the moving speed of the conveyor.

In this case, in addition to the moving direction of the jet nozzle of the water jet cutter in the same direction as the driving direction of the conveyor, the moving speed of the jet nozzle is also preferably synchronized with the moving speed of the conveyor, i.e., the moving speed of the honeycomb dried body. In this manner, the honeycomb dried body can be cut in such a manner that the cut surface is perpendicular to the longitudinal direction of the honeycomb dried body.

At this point, the moving speed of the honeycomb molded body extruded from the extruder is measured by the speed sensor in the molding step; and in the cutting step, the moving speed of the cutting member that moves in a direction parallel to the moving direction of the uncut honeycomb dried body is set to be the same as the moving speed measured by the speed sensor. Thereby, these moving speeds can be precisely synchronized with each other.

The molding, drying, and water jet cutting steps may not be carried out continuously. For example, the conveyor may be stopped immediately before the water jet cutting step, and the jet nozzle of the water jet cutter is moved in a direction perpendicular to the driving direction of the conveyor so that the water jet cutting step can be carried out in such a manner that the honeycomb dried body will have a cut surface perpendicular to the longitudinal direction of the honeycomb dried body.

In the method for cutting a honeycomb dried body of the present embodiment, the angle between the jet nozzle for the water jet and the upper face of the honeycomb dried body is preferably 5 to 85° throughout the water jet cutting step. The angle is more preferably 15 to 75°, still more preferably 30 to 60°.

In addition, the angle between the jet nozzle for the water jet and all the cell walls in a cross section perpendicular to the longitudinal direction of the honeycomb dried body is preferably 5 to 85°. The angle is more preferably 15 to 75°, still more preferably 30 to 60°.

The angle between the jet nozzle for the water jet and the upper face and cell walls of the honeycomb dried body is set in the range of 5 to 85°. This means that the direction of the water jet flow will not be parallel to the direction of the outer wall or the direction of the cell walls of the honeycomb dried body, and that the direction of water jet flow is tilted by at least 5°.

The direction of the water jet flow is tilted to the directions of the outer wall and the cell walls of the honeycomb dried body. This makes it possible to reduce the range of variation in the total thickness of the walls to be cut (the amount of cutting) at one time, thus allowing stable cutting. In a case where the honeycomb dried body has a square cross section and includes square-shaped cells, the angle of 45° can most reduce the amount of maximum cumulative cutting of the cell walls of the honeycomb dried body. The angle of about 15 to 30° or about 60 to 75° can not only reduce the amount of cumulative cutting but also provide a highly flat cut surface, owing to the fact that the maximum cutting depth is shallow and thus the water jet is prevented from spreading out too much in the cutting range of the honeycomb dried body.

The amount of cumulative cutting is defined as follows: (the cell wall thickness) × cos θ × (the number of cell walls to pass through). The maximum cutting depth is defined as follows: (the length of one side of the honeycomb dried body)/sin θ, wherein θ is the angle between the jet nozzle for the water jet and the cell walls.

The angle between the jet nozzle for the water jet and the upper face of the honeycomb dried body is defined as the smaller angle, which is closer to the honeycomb dried body, between the angles formed by the jet nozzle for the water jet and the upper face of the honeycomb dried body. The upper face of the honeycomb dried body refers to the plane of the honeycomb dried body where the water jet hits.

In addition, the angle between the jet nozzle for the water jet and the cell walls is defined as the smaller angle between the angles formed by the jet nozzle for the water jet and the cell walls. The direction of the cell walls is the direction of a line connecting repeated structures of cell walls having the same positional relationship relative to the cells in a cross section perpendicular to the longitudinal direction of the honeycomb dried body.

The following description is intended to describe the angle between the jet nozzle for the water jet and the upper face of the honeycomb dried body and the angle between the jet nozzle for the water jet and the cell walls, with reference to the figures.

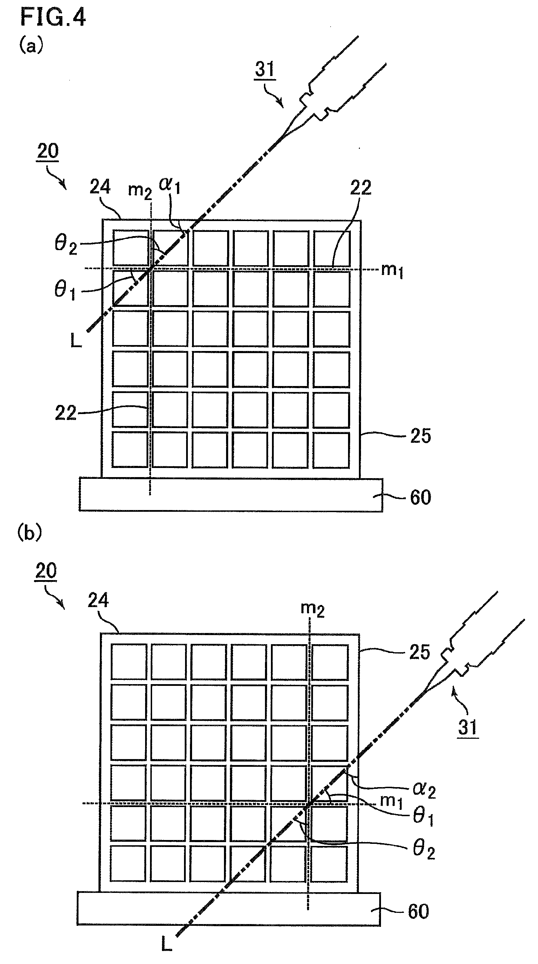

Figs. 4 (a) and 4 (b) are cross-sectional views each schematically showing the angular relationship of the jet nozzle for the water jet relative to an upper face and cell walls of a honeycomb dried body in a cross section perpendicular to the longitudinal direction of the honeycomb dried body.

Figs. 4 (a) and 4 (b) show a case where cells having a square cross section are arranged side by side as an example of the cell shape of the honeycomb dried body, and show how a the jet nozzle 31 of the water jet moves from the position shown in Fig 4 (a) to the position shown in Fig. 4(b).

In Figs. 4(a) and 4(b), the direction of the water jet jetted along the direction of the jet nozzle 31 of the water jet is indicated by line L.

The upper face of the honeycomb dried body refers to the plane of the honeycomb dried body where the water jet hits. A plane 24 in Fig. 4(a) and a plane 25 in Fig. 4(b) are each an upper face of the honeycomb dried body 20.

The angle between the jet nozzle for the water jet and the upper face of the honeycomb dried body is the angle indicated by α1 between the angles formed by line L and the plane 24 in Fig. 4(a), and is the angle indicated by α2 between the angles formed by line L and the plane 25 in Fig. 4(b).

The angles α1 and α2 in Figs. 4(a) and 4(b) are both 45°.

The direction of the cell walls is the direction of a line connecting repeated structures of cell walls having the same positional relationship relative to the cells in a cross section perpendicular to the longitudinal direction of the honeycomb dried body.

In Figs. 4(a) and 4(b), lines m1 and m2 indicate the direction of the cell walls 22.

In Figs. 4(a) and 4(b), the angles between the jet nozzle for the water jet and the cell walls are the angle indicated by θ1 between the angles formed by line L and line m1 and the angle indicated by θ2 between the angles formed line L and line m2.

The angles θ1 and θ2 in Figs. 4(a) and 4(b) are both 45°.

The amount of cumulative cutting is defined as follows: (the cell wall thickness) × cos θ1 (or θ2) × (the number of cell walls to pass through). The maximum cutting depth is defined as follows: (the length of one side of the honeycomb dried body)/sin 61 (or θ2).

The following description is intended to describe one example of how the angle between the jet nozzle for the water jet and the cell walls is defined in a case where the honeycomb dried body includes cells of different shapes in a cross section perpendicular to the longitudinal direction of the honeycomb dried body.

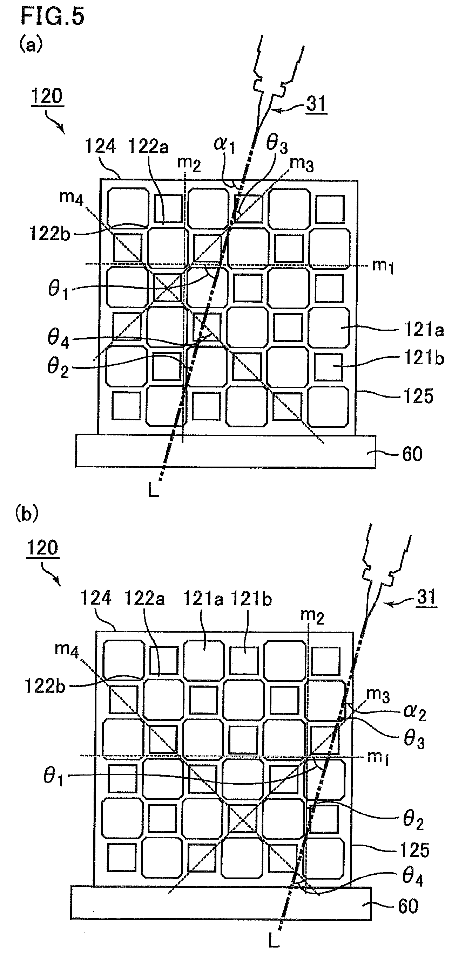

Figs. 5 (a) and 5(b) are cross-sectional views each schematically showing the angular relationship of the jet nozzle for the water jet relative to an upper face and cell walls of a honeycomb dried body in a cross section perpendicular to the longitudinal direction of the honeycomb dried body.

In a honeycomb dried body 120 shown in Figs. 5(a) and 5(b), a large volume cell 121a having an octagonal cross section and a small volume cell 121b having a square cross section are arranged side by side.

Figs. 5(a) and 5(b) show how the jet nozzle for the water jet moves from the position shown in Fig 5 (a) to the position shown in Fig. 5(b).

In Figs. 5(a) and 5(b), line L indicating the direction of the water jet jetted along the direction of the jet nozzle 31 of the water jet upper faces 124 and 125 of the honeycomb dried body 120, and the angles α1 and α2 formed between the jet nozzle for the water jet and the upper faces of the honeycomb dried body are as defined above in Figs. 4(a) and 4(b) for line L, the upper faces 24 and 25 of the honeycomb dried body 20, and the angles α1 and α2.

In Figs. 5(a) and 5(b), the angle α1 is 60° and the angle α2 is 30°.

As in the examples shown in Figs. 5 (a) and 5 (b), the angle between the jet nozzle for the water jet and the upper face of the honeycomb dried body may change when the plane of the honeycomb dried body hit by the water jet is switched during the water jet cutting step.

In Figs. 5(a) and 5(b), the directions of the cell walls are indicated by m1 and m2 which indicate the directions of cell walls 122a each separating the large volume cell 121a having an octagonal cross section and the small volume cell 121b having a square cross section, and are also indicted by m3 and m4 which indicate the directions of cell walls 122b each separating the large volume cells 121a having an octagonal cross section from each other.

The angle between the jet nozzle for the water jet and the cell walls is defined as the smaller angle between the angles formed by the jet nozzle for the water jet and the cell walls. Thus, in Figs. 5(a) and 5(b), the angles between the jet nozzle for the water jet and the cell walls includes the following angles: the angle indicated by θ1 between the angles formed by line L and line m1; the angle indicated by θ2 between the angles formed by line L and line m2; the angle indicated by θ3 between the angles formed by line L and line m3; and the angle indicated by θ4 between the angles formed by line L and line m4.

In Figs. 5 (a) and 5(b), the angle θ1 is 60°, the angle θ2 is 30°, the angle θ3 is 15°, and the angle θ4 is 75°.

The angle between the jet nozzle for the water jet and the upper face of the honeycomb dried body and the angle between the jet nozzle for the water jet and all the cell walls in a cross section perpendicular to the longitudinal direction of the honeycomb dried body can be adjusted by the following method, for example: a quadrangular pillar-shaped honeycomb dried body is conveyed on a conveyor having a face substantially parallel to the ground surface, and the jet nozzle of the water jet cutter is tilted at a certain angle from the direction perpendicular to the ground surface.

The distance between the jet nozzle for the water jet and the upper face of the honeycomb dried body is preferably 1 to 10 mm. The water jet tends to spread as the distance from the nozzle increases. With the above distance in a range of 1 to 10 mm, it is possible to keep high flatness of the cut surface of the honeycomb dried body.

In the water jet cutting step, multiple jet nozzles may be used simultaneously so that a plurality of honeycomb dried bodies can be obtained by a single cutting operation.

For example, after an uncut honeycomb dried body having a length corresponding to two honeycomb dried bodies each having a predetermined length is obtained, the honeycomb dried body can be cut simultaneously at two points at the same time in the water jet cutting step.

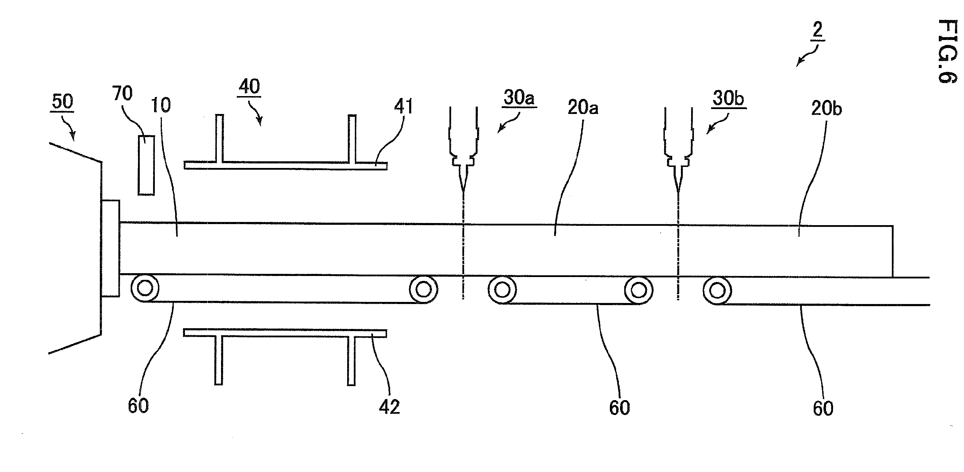

Fig. 6 is a side view schematically showing one example of the water jet cutting step in which multiple jet nozzles are simultaneously used.

A molding-drying-cutting apparatus 2 shown in Fig. 6 includes water jet cutters 30a and 30b.

At the point when the length of the uncut honeycomb dried body 20 reaches a length corresponding to two honeycomb dried bodies each having a predetermined length, the water jet cutters 30a and 30b are simultaneously operated at two points to carry out water jet cutting at the front and the back of a honeycomb dried body 20a, whereby the cut honeycomb dried bodies 20a and 20b can be simultaneously obtained.

In addition, multiple jet nozzles may be used to one cut surface of the honeycomb dried body. In this case, the length to be cut (cutting length) by the water jet from one nozzle can be shortened, so that the cutting time can be reduced. This effect is remarkable particularly in the case where the jet nozzles are tilted because the cutting length varies in different portions.

In the case of using multiple jet nozzles, the direction of each jet nozzle is preferably set in such a manner that a water flow of the water jet does not interfere with another water flow.

The cut honeycomb dried body obtained by the method for cutting a honeycomb dried body of the present embodiment is excellent in terms of flatness, and the cut surface obtained by water jet cutting can has a flatness of 0.2 mm or less. The flatness can be measured using a 3D measuring machine (for example, BH-V507 available from Mitsutoyo Corporation). Alternatively, a flat plate is pressed against the cut surface obtained by water jet cutting to measure the different distances between the surface of the flat plate and the cut surface at nine points; a hypothetical least squares plane is determined based on the measured distances; and the difference between the maximum and minimum distances between the hypothetical plane and the measurement points is determined, whereby the flatness can be calculated.

In addition, clogging of the ceramic powder in the cells is minimized in the cut honeycomb dried body obtained by the method for cutting a honeycomb dried body of the present invention, and the cell clogging rate on the cut surface of the honeycomb dried body can be reduced to 5% or less.

The cell clogging rate can be determined as follows: an electron microscope (SEM) photograph of a cut surface is binarized by image processing, and the area of only open cells is calculated and subtracted from the area of only open cells of a similar binarized image of a cut surface of a honeycomb dried body without clogged cells.

In addition, the cut honeycomb dried body obtained by the method for cutting a honeycomb dried body of the present embodiment preferably has an aperture ratio of 60 to 90%, more preferably 70 to 90%.

Herein, "the aperture ratio of the honeycomb dried body" can be calculated as follows: the open area at the end face is divided by the area of the entire end face to determine the ratio of the open area, and the ratio of the open area is multiplied by 100.

The cell wall thickness of the honeycomb dried body is preferably 0.07 to 0.46 mm, more preferably 0.10 to 0.26 mm, and still more preferably 0.10 to 0.21 mm.

The above cell wall thickness is sufficient to capture PM in exhaust gas, and an increase in the pressure loss can be effectively suppressed.

If the cell wall thickness is less than 0.07 mm, the mechanical strength of the honeycomb structured body will be reduced because the cell wall is too thin. If the cell wall thickness exceeds 0.46 mm, the pressure loss generated upon passage of exhaust gas through the cell wall will increase because the cell wall is too thick.

The following description is intended to describe a method for manufacturing a honeycomb structured body according to the first embodiment of the present invention, which is a method for manufacturing a honeycomb structured body using honeycomb dried bodies each having a predetermined length obtained by the method for cutting a honeycomb dried body according to the present embodiment.
(1) After the honeycomb dried body having a predetermined length is obtained, predetermined cells of the honeycomb dried body are plugged by placing a plug material paste as a plug (plugging step). The wet mixture used to manufacture the honeycomb molded body can be used as the plug material paste.
   The plugging step may not be necessary in the case of manufacturing a honeycomb structured body for use as a catalyst carrier.
(2) The honeycomb dried body is heated at 300°C to 650°C in a degreasing furnace to remove the organic matter in the honeycomb dried body (degreasing step). The degreased honeycomb dried body is then transferred to a firing furnace to be fired at 2000°C to 2200°C (firing step). Thereby, the honeycomb fired body is obtained.

The plug material paste placed at the end of the cells is fired into a plug.

In addition, the plugging, degreasing, and firing steps may be carried out under conditions that have been conventionally employed for manufacturing honeycomb fired bodies.

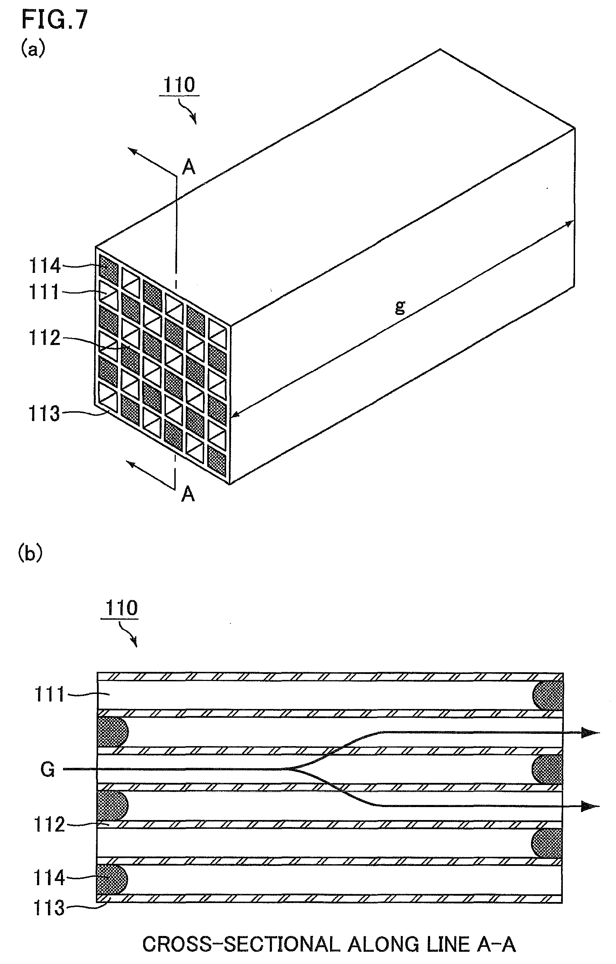

Fig. 7 (a) is a perspective view schematically showing one example of the honeycomb fired body obtained by the method for manufacturing a honeycomb structured body of the present embodiment. Fig. 7(b) is a cross-sectional view along line A-A of the honeycomb fired body shown in Fig. 7(a).

A honeycomb fired body 110 shown in Fig. 7(a) and Fig. 7(b) has a substantially same shape as the honeycomb dried body described above, and includes a plurality of cells 111 arranged side by side in the longitudinal direction (in the direction of an arrow g in Fig. 7(a)) with cell walls 112 between the cells, and an outer wall 113 formed on the periphery. Either end of each cell 111 is plugged with a plug 114.

Thus, an exhaust gas G (in Fig 7 (b), an exhaust gas is indicated by G, and the flow of the exhaust gas is indicated by arrows) that flowed into the cells 111 each having an open end face on one side inevitably passes through the cell walls 112 separating the cells 111, and then flows out from other cells 111 each having an open end face on the other side. PM and the like in the exhaust gas are captured as the exhaust gas G passes through the cell walls 112, so that each cell wall 112 functions as a filter.

As described above, a honeycomb structured body including honeycomb fired bodies in which the cells are plugged at one end can be suitably used as a ceramic filter.

Further, a honeycomb structured body including honeycomb fired bodies in which the cells are not plugged at either end can be suitably used as a catalyst carrier.
(3) A plurality of honeycomb fired bodies are stacked in series via the adhesive paste therebetween on a support table to combine the honeycomb fired bodies (combining step) to obtain a honeycomb aggregate body including the plurality of stacked honeycomb fired bodies.

The adhesive paste contains, for example, an inorganic binder, an organic binder, and inorganic particles. The adhesive paste may further contain inorganic fibers and/or whiskers.

Examples of the inorganic particles in the adhesive paste include carbide particles and nitride particles. Specific examples include silicon carbide particles, silicon nitride particles, and boron nitride particles. These may be used alone or in combination of two or more thereof. Among the inorganic particles, silicon carbide particles having excellent thermal conductivity are preferred.

Examples of the inorganic fibers and/or whiskers in the adhesive paste include inorganic fibers and/or whiskers of silica-alumina, mullite, alumina, and silica. These may be used alone or in combination of two or more thereof. The alumina fiber is preferred among the inorganic fibers. The inorganic fibers may be biosoluble fibers.

The adhesive paste may further contain balloons (i.e., fine hollow spheres including oxide-based ceramics), spherical acrylic particles, or graphite, as needed. The balloons are not particularly limited, and examples thereof include alumina balloons, glass microballoons, shirasu balloons, fly ash balloon (FA balloons), and mullite balloons.
(4) The honeycomb aggregate body is heated so that the adhesive paste is solidified to form an adhesive layer, whereby a quadrangular pillar-shaped ceramic block is obtained.
   The heating and solidifying of the adhesive paste may be carried out under conditions that have been employed for manufacturing honeycomb structured bodies.
(5) The ceramic block is subjected to processing (processing step).
   Specifically, the outer periphery of the ceramic block is processed with a diamond cutter, whereby a ceramic block having a substantially round pillar-shaped outer periphery is obtained.
(6) A peripheral coating material paste is applied to the outer peripheral face of the substantially round pillar-shaped ceramic block, and is dried and solidified to form a peripheral coat layer (peripheral coat layer forming step).

The adhesive paste may be used as the peripheral coating material paste. A paste having a composition different from that of the adhesive paste may also be used as the peripheral coating material paste.

The peripheral coat layer is not necessarily formed, and it may be formed as needed.

The peripheral shape of the ceramic block can be adjusted by providing the peripheral coat layer so as to obtain a round pillar-shaped honeycomb filter.

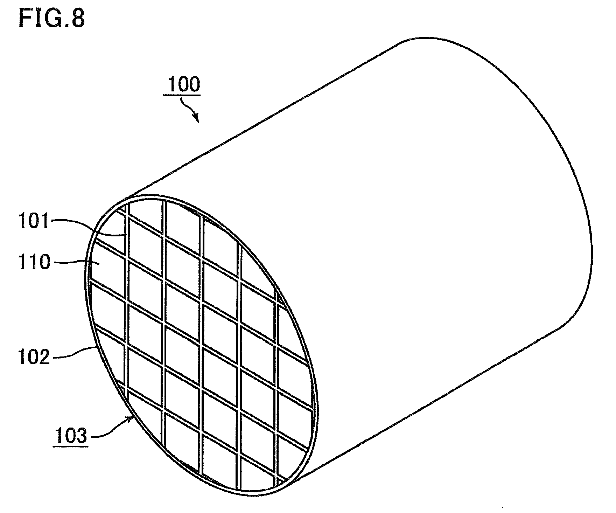

Fig. 8 is a perspective view schematically showing one example of the honeycomb structured body obtained by the method for manufacturing a honeycomb structured body of the present embodiment.

A honeycomb filter 100 shown in Fig. 8 includes a ceramic block 103 formed by combining a plurality of honeycomb fired bodies 110 via an adhesive layer 101 therebetween, and has a peripheral coat layer 102 on the outer periphery of the ceramic block 103. The peripheral coat layer may be formed as needed. Such a honeycomb structured body including a plurality of honeycomb fired bodies combined together is also referred to as an aggregated honeycomb structured body.

A honeycomb structured body to be manufactured by the method for manufacturing a honeycomb structured body according to the embodiment of the present invention may be a honeycomb structured body consisting of one honeycomb fired body. Such a honeycomb structured body formed of one honeycomb fired body is also referred to as an integral honeycomb structured body. In the case of manufacturing the integral honeycomb structured body, it is preferred to use cordierite or aluminum titanate as the ceramic powder.

The integral honeycomb structured body may be manufactured in the same manner as the aggregated honeycomb structured body, except that the honeycomb molded body formed by extrusion is larger and its external shape is different, compared to the case of manufacturing the aggregated honeycomb structured body.

In the method for manufacturing a honeycomb structured body according to the embodiment of the present invention, a catalyst for converting the exhaust gas may be carried on the cell walls of the honeycomb fired bodies constituting the honeycomb structured body to be manufactured.

Preferred examples of catalysts to be supported include noble metals such as platinum, palladium, and rhodium. Examples of other catalysts include alkali metals such as potassium and sodium; alkaline-earth metals such as barium; and zeolite. These catalysts may be used alone or in combination of two or more thereof.

The effects of the method for cutting a honeycomb dried body and the method for manufacturing a honeycomb structured body according to the present embodiment are listed below.
(1) In the method for cutting a honeycomb dried body according to the present embodiment, the honeycomb dried body is cut to a predetermined length with a water jet. Thus, it is possible to obtain a honeycomb dried body in which burrs on the end faces and clogging of the ceramic powder in the cells are minimized.
   Thus, removal of burrs or ceramic powder in the cells is not necessary after cutting, which can significantly simplify the manufacturing process of a honeycomb structured body.
(2) In the method for cutting a honeycomb dried body according to the present embodiment, an uncut honeycomb molded body is dried into a honeycomb dried body, which is then cut by water jet cutting, whereby a honeycomb dried body having a predetermined length can be obtained by single cutting. Thus, the entire process for manufacturing a honeycomb structured body can be simplified. In addition, removal of a deformed portion of an end face is not necessary, so that the material loss can be reduced.
(3) In the method for cutting a honeycomb dried body according to the present embodiment, the molding, drying, and water jet cutting steps are continuously carried out, and in the water jet cutting step, the honeycomb dried body is cut while the moving speed of the jet nozzle for the water jet is synchronized with the moving speed of the honeycomb dried body.
   In this manner, the honeycomb dried body can be cut in such a manner that the cut surface is perpendicular to the longitudinal direction of the honeycomb dried body.
(4) In the method for cutting a honeycomb dried body according to the present invention, the uncut honeycomb molded body can be dried by high-frequency dielectric drying in the drying step. High-frequency dielectric drying can uniformly dry the honeycomb molded body even to the inside in a short time.
(5) In the method for cutting a honeycomb dried body according to the present embodiment, the angle between the jet nozzle for the water jet and the upper face of the honeycomb dried body can be 5 to 85°. In addition, the angle between the jet nozzle for the water jet and all the cell walls in a cross section perpendicular to the longitudinal direction of the honeycomb dried body can be 5 to 85°.
   This makes it possible to reduce the range of variation in the thickness of the walls to be cut (the amount of cutting) at one time in the water jet cutting step, thus allowing stable cutting.
(6) In the method for cutting a honeycomb dried body according to the present embodiment, the water pressure of the water jet can be 200 to 400 MPa. With the water pressure in the above range, the formation of burrs on the cut surface or clogging of the ceramic powder in the cells can be more effectively suppressed, resulting in a cleaner cut surface.
(7) In the method for cutting a honeycomb dried body according to the present embodiment, the cutting speed can be 15 to 150 mm/sec in the water jet cutting step. The cutting speed in the above range is effective in that the water jet cutting step is prevented from becoming the rate controlling factor in the manufacturing process of the honeycomb structured body, thus not interfering with the production efficiency.
(8) In the method for cutting a honeycomb dried body according to the present embodiment, the honeycomb dried body to be cut can have an aperture ratio of 60 to 90%. The method for cutting a honeycomb dried body according to the present embodiment is effective in that deformation of a honeycomb dried body can be suppressed even if the aperture ratio is high.
(9) In the method for manufacturing a honeycomb structured body according to the present embodiment, the method for cutting a honeycomb dried body according to the present embodiment can be used. Thus, the honeycomb structured body can be manufactured by a significantly simplified manufacturing process of the honeycomb structured body.

Examples that more specifically disclose the first embodiment of the present invention are described below. The present invention is not limited to these examples.

### (Example 1)

A mixture was obtained by mixing 54. 8% by weight of coarse powder of silicon carbide having an average particle diameter of 22 µm and 23.5% by weight of fine powder of silicon carbide having an average particle diameter of 0.5 µm. To the resulting mixture were added 4.4% by weight of an organic binder (methylcellulose), 2.6% by weight of a lubricant (UNILUB available from NOF Corporation), 1.2% by weight of glycerin, and 13.5% by weight of water, followed by kneading to prepare a wet mixture. Subsequently, the wet mixture was continuously extruded from the extruder (molding step).

In this step, an uncut honeycomb molded body having the same shape as the honeycomb dried body 20 shown in Fig. 2 was manufactured.

The cell wall thickness was 0.40 mm (16 mil) and the cell density was 200 pcs/inch².

The molding speed was 0.1 m/min.

Next, a high-frequency dielectric dryer placed at a position 30 mm away from the die of the extruder was used to dry the uncut honeycomb molded body into an uncut honeycomb dried body.

High-frequency dielectric heating conditions were as follows: an output of 0.3 kW, a frequency of 13.56 MHz, and an electrode length of 150 mm.

Subsequently, a water jet cutter was used to cut the honeycomb dried body into a cut honeycomb dried body.

The cutting conditions were as follows: a water nozzle diameter of the water jet cutter of 0.2 mm, a lower nozzle diameter of 0.5 mm, a water pressure of 300 MPa, a cutting speed of 19.1 mm/s, an angle of 45° between the jet nozzle and the upper face of the honeycomb dried body, and a distance of 1 mm between the tip end of the jet nozzle and the upper face of the honeycomb dried body.

Subsequently, plugging of the cells was carried out in such a manner that the ends of the cells were plugged at the positions shown in Fig. 7(a).

The wet mixture was used as a plug material paste. After plugging the cells, the honeycomb dried body including the plug material paste was dried using a dryer.

Subsequently, the honeycomb dried body with the plugged cells was degreased at 400°C (degreasing treatment) and fired at 2200°C under argon atmosphere at normal pressure for 3 hours (firing treatment).

Thereby, a honeycomb fired body was manufactured.

The honeycomb fired body was a honeycomb fired body formed of a silicon carbide fired body having a porosity of 42%, an average pore diameter of 11 µm, a size of 34.3 mm × 34.3 mm × 150 mm, a number of cells (cell density) of 200 pcs/inch², an aperture ratio of 60%, and a cell wall thickness of 0.40 mm (16 mil).

Subsequently, multiple honeycomb fired bodies were combined using a heat-resistant adhesive paste containing 30% by weight of alumina fiber having an average fiber length of 20 µm, 21% by weight of silicon carbide particles having an average particle diameter of 0.6 µm, 15% by weight of silica sol, 5.6% by weight of carboxymethyl cellulose, and 28.4% by weight of water; and the adhesive paste was dried and solidified at 120°C to form an adhesive layer, whereby a rectangular pillar-shaped ceramic block was obtained.

Subsequently, the outer periphery of the rectangular pillar-shaped ceramic block was processed with a diamond cutter, whereby a substantially round pillar-shaped ceramic block was obtained.

Subsequently, a sealing material paste having the same composition as the adhesive paste was applied to the outer peripheral face of the ceramic block, and the sealing material paste was dried and solidified at 120°C to form a peripheral coat layer, whereby manufacturing of a round pillar-shaped honeycomb structured body was completed.

The honeycomb structured body had a diameter of 143.8 mm and a longitudinal length of 150 mm.

### (Examples 2 to 9)

The honeycomb dried body was cut in the same manner as in Example 1, except that the water jet cutting conditions in Example 1 were changed as shown in Table 1. The honeycomb structured body was manufactured by applying the same conditions as in Example 1 to the other steps.

The "nozzle angle" in Table 1 refers to the angle between the jet nozzle and the upper face of the honeycomb dried body. Table 1 shows a smaller angle in the case where the angle of the jet nozzle changes as the upper face to be hit by a water jet changes along with the movement of the jet nozzle. The shape of the honeycomb dried body in each of Examples 2 to 9 is a rectangular pillar shape having a square cross section. Thus, in Example 2 for example, the nozzle angle is 30° or 60°, and Table 1 shows a smaller angle 30°.

The "nozzle distance" in Table 1 refers to the distance between the tip end of the jet nozzle and the upper face of the honeycomb dried body.

In each of Examples 2 to 9, the diameter of the lower nozzle for the water jet cutter was 0.5 mm, and the water pressure was 300 MPa.

### (Comparative Example 1)

After the molding step was carried out as in Example 1, an uncut honeycomb molded body was cut with a wire into a cut honeycomb molded body. Subsequently, the honeycomb molded body was dried using a microwave dryer, whereby a honeycomb dried body was obtained.

Subsequently, an end portion of the honeycomb dried body was cut with a cutting disk (blade) with reference to the method disclosed in Patent Literature 1. Specifically, processing was carried out using a diamond cutter having a diameter of 205 mm and a thickness of 1.2 mm, at a circumferential velocity of the cutting disk of 4300 m/min.

### (Evaluation of cut surface)

The cut surface of each cut honeycomb dried body obtained in Example 1 and Comparative Example 1 was photographed, and the cell clogging rate was calculated.

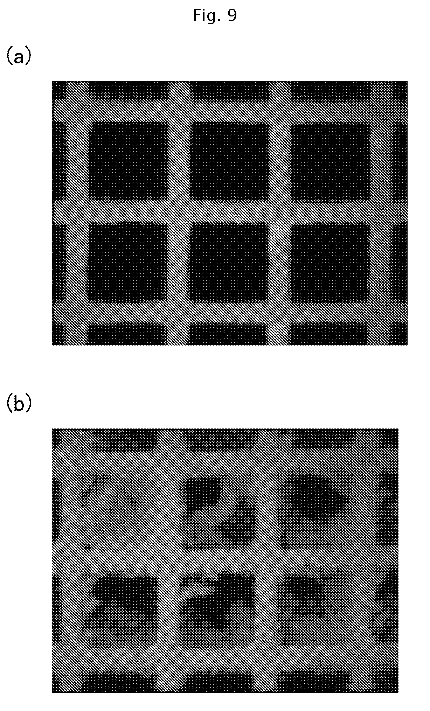

Fig. 9(a) is a photograph of the cut surface of the honeycomb dried body obtained in Example 1. Fig. 9(b) is a photograph of the cut surface of the honeycomb dried body obtained in Comparative Example 1.

As is clear from the photographs, the cut surface obtained with water jet cutting in Example 1 was clean without any clogging of the ceramic powder. In contrast, the cut surface obtained with blade cutting in Comparative Example 1 showed clogging of the ceramic powder in the cells and burrs.

In addition, according to the calculation of the cell clogging rate, the cell clogging rate of the cut surface of the honeycomb dried body in Example 1 was 0%, and the cell clogging rate of the cut surface of the honeycomb dried body in Comparative Example 1 was 50.7%.

Table 1 similarly shows the measurement results of the cell clogging rates in Examples 2 to 9.

### (Evaluation of wetting)

The amount of wetting in Examples 1 to 9 was evaluated from the difference between the weight of the honeycomb dried body immediately after cutting and the weight of the honeycomb dried body in a completely dry state. Table 1 shows the results. In each of Examples 1 to 9, the amount of wetting was in the range of 0.97 to 2.32 g. In view of the fact that the weight increases by about 1.0 g from water absorption when left to stand for one day, the amount of wetting in Examples 1 to 9 is considered to be very small.

### (Evaluation of flatness)

The flatness of the lateral face of each honeycomb dried body obtained in Example 1 and Comparative Example 1 was measured by a 3D measuring machine (BH-V507 available from Mitsutoyo Corporation).

As a result, the cut surface of the honeycomb dried body in Example 1 had a flatness of 0.12 mm, and the cut surface of the honeycomb dried body in Comparative Example 1 had a flatness of 0.17 mm. Thus, the cut surface of the honeycomb dried body obtained with water jet cutting in Example 1 was superior in flatness. Table 1 similarly shows the measurement results of the flatness in Examples 2 to 9.

**[Table 1]**

| | Water jet cutting conditions | | | | Evaluation results | | |
|---|---|---|---|---|---|---|---|
| | Nozzle angle | Nozzle distance | Water nozzle diameter | Cutting speed | Flatness | Cell clogging rate | Amount of wetting |
| | (° ) | (mm) | (mm) | (mm/sec) | (mm) | (%) | (g) |
| Example 1 | 45 | 1 | 0.20 | 19.1 | 0.12 | 0 | 1.21 |
| Example 2 | 30 | 1 | 0.20 | 18.9 | 0.08 | 0 | 1.14 |
| Example 3 | 15 | 1 | 0.20 | 17.9 | 0.06 | 0 | 1.07 |
| Example 4 | 0 | 1 | 0.20 | 10.3 | 0.81 | 0 | 2.32 |
| Example 5 | 45 | 1 | 0.20 | 76.4 | 0.19 | 0 | 0.97 |
| Example 6 | 30 | 1 | 0.20 | 75.6 | 0.22 | 0 | 0.91 |
| Example 7 | 15 | 1 | 0.20 | 71.4 | 0.24 | 0 | 1.08 |
| Example 8 | 30 | 3 | 0.20 | 18.9 | 0.13 | 0 | 1.22 |
| Example 9 | 30 | 1 | 0.22 | 18.9 | 0.37 | 0 | 1.36 |
| Comparative Example 1 | - | - | - | - | 0.17 | 50.7 | - |

### (Second embodiment)

The following description is intended to describe a method for cutting a honeycomb dried body and a method for manufacturing a honeycomb structured body according to a second embodiment of the present invention.

The method for cutting a honeycomb dried body according to the second embodiment of the present invention includes the steps of molding a ceramic raw material by continuous extrusion using an extruder into an uncut honeycomb molded body including a plurality of cells as fluid passages and cell walls defining the plurality of cells;
temporarily cutting the uncut honeycomb molded body to a length longer than the predetermined length to obtain a temporarily cut honeycomb molded body; and
drying the temporarily cut honeycomb molded body into a temporarily cut honeycomb dried body,
the temporarily cut honeycomb dried body being cut in the water jet cutting step.

In the present embodiment, after the molding step, the temporarily cutting step is carried out before the drying step, whereby a temporarily cut honeycomb molded body is obtained.

The molding step of the present embodiment can be carried out in the same manner as in the molding step in the method for cutting a honeycomb dried body according to the first embodiment, and an uncut honeycomb molded body can be obtained in the molding step.

Subsequently, the uncut honeycomb molded body is temporarily cut.

Examples of temporarily cutting methods include a cutting method that uses a wire (a metal wire or a resin-coated metal wire) as a cutting member.

In the temporarily cutting step, the honeycomb molded body is cut into a temporarily cut honeycomb molded body in such a manner that its longitudinal length is longer than the longitudinal length (predetermined length) of the honeycomb dried body as the final product.

In the temporarily cutting step, temporarily cutting may be carried out while the moving speed of a cutting member is synchronized with the moving speed of the honeycomb molded body.

In addition, the moving speed of the honeycomb molded body extruded from the extruder may be measured by a speed sensor, so that the moving speed of the cutting member in a direction parallel to the moving direction of the honeycomb molded body can be set to be the same as the moving speed measured by the speed sensor.

Subsequently, the drying step is carried out where the temporarily cut honeycomb molded body is dried into a temporarily cut honeycomb dried body.

Examples of drying methods include a method that uses a dryer such as a microwave dryer, hot-air dryer, dielectric dryer, reduced-pressure dryer, vacuum dryer, or freeze dryer.

Subsequently, the temporarily cut honeycomb dried body is cut to a predetermined length by water jet cutting.

In the present embodiment, it is preferred to cut both ends of the temporarily cut honeycomb dried body by water jet cutting to adjust its length to a predetermined length.

In this manner, a honeycomb dried body having a predetermined length can be obtained in which the cut surface has no burrs or clogging of the ceramic powder.

Conditions for the water jet cutting step may be the same as in the first embodiment, wherein such conditions includes, for example, cutting speed, water pressure, angle between the jet nozzle and the upper face of the honeycomb dried body, and angle between the jet nozzle and all the cell walls on a cross section perpendicular of the longitudinal direction of the honeycomb dried body.

In addition, in the present embodiment, preferably, the temporarily cut honeycomb dried body is fixed at a predetermined position for cutting both ends thereof. Further, use of two water jet cutters to simultaneously cut both ends of the temporarily cut honeycomb dried body makes it possible to efficiently obtain a honeycomb dried body having a predetermined length.

The method for manufacturing a honeycomb structured body according to the second embodiment of the present invention can be carried out in the same manner as in the method for manufacturing a honeycomb structured body according to the first embodiment of the present invention, except that the honeycomb dried body having a predetermined length used for manufacturing of a honeycomb structured body is the honeycomb dried body that has been cut by the method for cutting a honeycomb dried body according to the second embodiment of the present invention. Thus, a detailed description of the method is omitted.

The effects of the method for cutting a honeycomb dried body and the method for manufacturing a honeycomb structured body according to the present embodiment are listed below.

The method for cutting a honeycomb dried body according to the second embodiment of the present invention includes temporarily cutting an uncut honeycomb molded body to a length longer than the predetermined length to obtain a temporarily cut honeycomb molded body, and drying the temporarily cut honeycomb molded body into a temporarily cut honeycomb dried body, the temporarily cut honeycomb dried body being cut in the water jet cutting step.

This method also results in a honeycomb dried body having a clean cut surface without burrs or clogging of the ceramic powder because the honeycomb dried body is cut to a predetermined length by water jet cutting.

The second embodiment of the present invention can achieve the effects (1) and (5) to (9) as described in the first embodiment.

### REFERENCE SIGNS LIST

- 10:: honeycomb molded body
- 20, 20a, 20b, 120:: honeycomb dried body
- 21, 111, 121a, 121b:: cell
- 22, 112, 122a, 122b:: cell wall
- 24, 25, 124, 125:: upper face of honeycomb dried body
- 30, 30a, 30b:: water jet cutter
- 31:: jet nozzle
- 40:: high-frequency dielectric dryer
- 50:: extruder
- 70:: speed sensor
- 100:: honeycomb structured body
- 110:: honeycomb fired body

## Claims

1. A method for cutting a honeycomb dried body, the method comprising the step of:
water jet cutting to cut a honeycomb dried body to a predetermined length with a water jet, the honeycomb dried body being a dried product of a pillar-shaped honeycomb molded body including a plurality of cells as fluid passages and cell walls defining the plurality of cells.

2. The method according to claim 1,
wherein the honeycomb dried body contains a forming auxiliary and an organic binder.

3. The method according to claim 2,
wherein the forming auxiliary is at least one selected from the group consisting of ethylene glycol, dextrin, fatty acids, fatty acid soap, and polyalcohol.

4. The method according to claim 2 or 3,
wherein the organic binder is at least one selected from the group consisting of methyl cellulose, carboxymethyl cellulose, hydroxyethyl cellulose, and polyethylene glycol.

5. The method according to any one of claims 1 to 4, the method comprising the steps of:
molding a ceramic raw material by continuous extrusion using an extruder into an uncut honeycomb molded body including a plurality of cells as fluid passages and cell walls defining the plurality of cells; and
drying the uncut honeycomb molded body into an uncut honeycomb dried body;
the uncut honeycomb dried body being cut in the water jet cutting.

6. The method according to claim 5,
wherein the molding, the drying, and the water jet cutting are continuously carried out, and
in the water jet cutting, the uncut honeycomb dried body is cut while a moving speed of a jet nozzle for the water jet is synchronized with a moving speed of the uncut honeycomb dried body.

7. The method according to claim 6,
wherein, in the molding, a moving speed of the uncut honeycomb molded body extruded from the extruder is measured by a speed sensor, and
in the water jet cutting, a moving speed of the jet nozzle for the water jet in a direction parallel to a moving direction of the honeycomb dried body is set to be the same as the moving speed measured by the speed sensor.

8. The method according to any one of claims 5 to 7,
wherein, in the drying, the uncut honeycomb molded body is dried by high-frequency dielectric drying.

9. The method according to any one of claims 1 to 4, the method including the steps of:
molding a ceramic raw material by continuous extrusion using an extruder into an uncut honeycomb molded body including a plurality of cells as fluid passages and cell walls defining the plurality of cells;
temporarily cutting the uncut honeycomb molded body to a length longer than the predetermined length to obtain a temporarily cut honeycomb molded body; and
drying the temporarily cut honeycomb molded body into a temporarily cut honeycomb dried body,
the temporarily cut honeycomb dried body being cut in the water jet cutting.

10. The method according to any one of claims 1 to 9,
wherein the honeycomb dried body has a moisture content of 0 to 6% by mass.

11. The method according to any one of claims 1 to 10,
wherein an angle between the jet nozzle for the water jet and an upper face of the uncut honeycomb dried body is 5 to 85°.

12. The method according to any one of claims 1 to 11,
wherein an angle between the jet nozzle for the water jet and all the cell walls in a cross section perpendicular to the longitudinal direction of the uncut honeycomb dried body is 5 to 85°.

13. The method according to any one of claims 1 to 12,
wherein the water jet has a water pressure of 200 to 400 MPa.

14. The method according to any one of claims 1 to 13,
wherein the cutting speed in the water jet cutting is 15 to 150 mm/sec.

15. The method according to any one of claims 1 to 14,
wherein the honeycomb dried body has an aperture ratio of 60 to 90%.

16. A method for manufacturing a honeycomb structured body including a honeycomb fired body including a plurality of cells as fluid passages and cell walls defining the plurality of cells,
the method comprising the step of firing a honeycomb dried body having a predetermined length obtained by the method according to any one of claims 1 to 15 to obtain the honeycomb fired body.

17. A honeycomb dried body obtained by cutting a honeycomb dried body to a predetermined length with a water jet,
the honeycomb dried body being a dried product of a pillar-shaped honeycomb molded body including a plurality of cells as fluid passages and cell walls defining the plurality of cells.

18. A honeycomb structured body comprising:
a honeycomb fired body obtained by firing a honeycomb dried body having a predetermined length obtained by cutting a honeycomb dried body to a predetermined length with a water jet, the honeycomb dried body being a dried product of a pillar-shaped honeycomb molded body including a plurality of cells as fluid passages and cell walls defining the plurality of cells.
